(19) Europäisches Patentamt
European Patent Office
Office européen des brevets

(11) **EP 3 698 308 B1**

(12) **EUROPEAN PATENT SPECIFICATION**

(45) Date of publication and mention
of the grant of the patent:
**12.02.2025 Bulletin 2025/07**

(21) Application number: **17825542.8**

(22) Date of filing: **22.12.2017**

(51) International Patent Classification (IPC):
***G06Q 30/02*** *(2023.01)*

(52) Cooperative Patent Classification (CPC):
**G06Q 30/02; G06N 20/20**

(86) International application number:
**PCT/EP2017/084491**

(87) International publication number:
**WO 2019/120578 (27.06.2019 Gazette 2019/26)**

(54) **CLIENT, SERVER, AND CLIENT-SERVER SYSTEM ADAPTED FOR GENERATING PERSONALIZED RECOMMENDATIONS**

CLIENT, SERVER UND CLIENT-SERVER-SYSTEM ZUR ERZEUGUNG PERSONALISIERTER EMPFEHLUNGEN

CLIENT, SERVEUR ET SYSTÈME CLIENT-SERVEUR CONÇUS POUR GÉNÉRER DES RECOMMANDATIONS PERSONNALISÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.08.2020 Bulletin 2020/35**

(73) Proprietor: **Huawei Technologies Co., Ltd.**
**Shenzhen, Guangdong 518129 (CN)**

(72) Inventor: **FLANAGAN, Adrian**
**164 40 Kista (SE)**

(74) Representative: **Grünecker Patent- und Rechtsanwälte**
**PartG mbB**
**Leopoldstraße 4**
**80802 München (DE)**

(56) References cited:
**US-A1- 2012 030 159**    **US-A1- 2014 129 500**

- **LIU MENGHAN ET AL: "A Collaborative Privacy-Preserving Deep Learning System in Distributed Mobile Environment", 2016 INTERNATIONAL CONFERENCE ON COMPUTATIONAL SCIENCE AND COMPUTATIONAL INTELLIGENCE (CSCI), IEEE, 15 December 2016 (2016-12-15), pages 192 - 197, XP033078447, DOI: 10.1109/ CSCI.2016.0043**

**Description**

TECHNICAL FIELD

The disclosure relates to an improved client, server, and client-server system allowing generation of personalized recommendations.

BACKGROUND

A client-server system is a structure in which the tasks of the system are divided between the provider of a service, i.e. a server, and service requesters, i.e. clients. The server may run one or more programs which share their resources with the clients. The client, on the other hand, does not share any of its resources, but requests a server's content or service function. The clients, i.e. user devices such as mobile phones or tablets, are an important part of a machine learning process used in such a client-server system, since each client is a source of data, the data being used for building the models used in the machine learning process and for generating the results from the models.

The results may, e.g., be a recommendation of one or several specific items, taken from a larger set of items, which specific items are predicted, by one or several models, to be of interest to the user of the client. An item is, e.g., a video available for viewing, an application available for downloading, or a physical object such as a piece of clothing available for purchase. The clients and the items may be collected in a so-called client-item matrix.

The machine learning process comprises creating complex models and algorithms which may be used for prediction-making, e.g. by exploiting patterns found in historical and transactional data. There are several techniques for prediction-making, but one common feature is the application of a predictive score, such as a rating, to individual elements within a larger set of elements, such as e.g. video clips or pieces of clothing. The predictions indicate the probability of the user viewing the video, downloading the application, or purchasing the piece of clothing, and may subsequently be used for generating recommendations to the user.

It is difficult to achieve an efficient machine learning process, since it is hard to find patterns and oftentimes there is not sufficient training data available; as a result, machine learning processes often fail to deliver. Hence, it is important that as much data as possible is available to the machine learning process. For a client-server system, this translates to the server having access to as many clients, and their data, as possible. Each client is a user device such as a mobile phone or a tablet, and it is not only a source of data used for building models used in the machine learning process, but it is also the medium for delivering the results of the models, e.g. recommending the video clips or pieces of clothing, which have received the highest scores, to the user of the client.

The prior art approach to such model building comprises sending user data to a central server, where different algorithms are used to process the data, build the models, and generate results in the form of recommendations. The recommendations are to be individual and personal, wherefore the more personal the data, the better the recommendations.

Clients, such as mobile phones and tablets, comprise different kinds of personal user data, e.g., client location, which may be considered very sensitive personal data, and downloaded applications, which may be considered not particularly sensitive personal data. Regardless of the sensitivity levels, the data is still considered to be personal user data.

Regulations such as, e.g., the GDPR (General Data Protection Regulation) which is to be enforced in the EU countries in 2018, as well as general scrutiny of how companies collect, store, and use user data are issues which make generating personalized recommendations more difficult, and maybe even impossible when explicit user opt-in consent is required to collect the user's data and to store and process it. With surveys disclosing opt-in rates as low as 20%, trying to generate such personalized recommendations may no longer be useful.

Furthermore, collecting gigabytes of user data daily, for a large number of clients, as well as storing and using the data securely, requires expensive infrastructure and administration solutions.

Providing results such as personalized recommendations to the user of a client is an important means of engaging users in a service, e.g., by helping users find video clips they would enjoy watching while filtering out content that they are not interested in, e.g. due to having already watched a video clip.

US 2012/0030159 A discloses a recommender system and methods, US 2014/0129500 A1 discloses an efficient modelling system, and LIU MENGHAN ET AL, 2016 INTERNATIONAL CONFERENCE ON COMPUTATIONAL SCIENCE AND COMPUTATIONAL INTELLIGENCE (CSCI), IEEE, pages 192 - 197, disclose "A Collaborative Privacy-Preserving Deep Learning System in Distributed Mobile Environment".

SUMMARY

It is an object to provide an improved client-server system.

The foregoing and other objects are achieved by the features of the independent claim 1. Further implementation forms are apparent from the dependent claims, the description, and the figures.

According to an illustrative example, there is provided a client adapted for generating personalized item recommendations for a user of the client, the client being connected to a server utilizing a global set of items and at least one model, the client being configured to utilize at least one model downloaded from the server, and generate a recommendation set, comprising at least one of the items, by means of at least one of the downloaded model(s) and a local client data set stored on the client.

A client, comprising these features, allows efficient and secure generation of personalized item recommendations since some of the calculations, necessary for generating personalized item recommendations, are executed on the client, and some of the data used in the calculations is stored on the client.

In a possible implementation form of the first aspect, the model(s) comprise Collaborative Filtering, Predictive Modeling, and/or Deep Learning Models, models which are well-established for different types of use.

In a further possible implementation form of the first aspect, the client data set comprises implicit user feedback and/or explicit user feedback, allowing estimates, used for generating personalized item recommendations, to be calculated on the basis of user actions, as well as allowing user reviews to be taken into account in the calculations.

In a further possible implementation form of the first aspect, the recommendation set is generated by means of a combination of two models and the client data set, wherein one model is Collaborative Filtering and the other model is Predictive Modeling, models which, when combined, allow a highly efficient generation of personalized item recommendations.

In a further possible implementation form of the first aspect, the recommendation set comprises a first recommendation set generated by means of one model and the client data set, and a second recommendation set generated by means of a further model, the first recommendation set, and the client data set, allowing the first recommendation set to be improved.

In a further possible implementation form of the first aspect, generating the second recommendation set comprises selecting and scoring individual items of the first recommendation set, allowing generation of a smaller, and/or more correct, recommendation set.

In a further possible implementation form of the first aspect, the client is configured to update each downloaded model by means of: calculating an updated model by means of the downloaded model and the local client data set, uploading the updated model to the server, wherein the updated model is used for the server calculating a new updated model, downloading the new updated model from the server, and calculating at least one further updated model by means of the new updated model and the local client data set.

A client, comprising these features, allows for a machine learning process which is efficient, since it has access to the client data of all clients connected to a server, as well as secure, since the client data related to an individual client remains on the very same. Since the server, connected to the client, does not have to collect or store large amounts of client data, the process is time- and cost-effective as well.

In a further possible implementation form of the first aspect, the client is configured to calculate at least one update for each model by means of: calculating an update for each downloaded model by means of the local client data set, uploading the update to the server, wherein the update is used for the sever calculating an updated model, downloading the updated model from the server, calculating a new update for the updated model by means of the local client data set, calculating at least one further updated model by means of the updated model, the new update and the local client data set.

As mentioned above, a client, comprising these features, allows for a machine learning process which is efficient as well as secure. Since the client does not have to download or upload entire models from the server, the process is particularly effective.

In a further possible implementation form of the first aspect, calculating an update comprises calculating a value for each item by means of a function $f(i,j)$, allowing a value which is disengaged from any personal client data to be calculated.

In a further possible implementation form of the first aspect, the client is further configured to generate a recommendation set by means of the further updated model and the local client data set, allowing as much client data as possible to be used.

According to another illustrative example, there is provided a server adapted for assisting in generating personalized item recommendations for a user of a client, on the client, the server being configured to utilize a global set of items and at least one model, the server being connected to a plurality of clients, each client being configured to download the model(s), and generate updated model(s) or updates for the model(s), the server further being configured to: generate new updated model(s) by means of updated models or updates uploaded by at least one of the clients, and transmit the new updated model(s) to the plurality of clients, wherein the new updated model(s) and a local client data set, stored on the client, are utilized for each client (i) generating the personalized item recommendations.

A server, comprising these features, allows efficient and secure generation of personalized item recommendations since some of the calculations, necessary for generating personalized item recommendations, are executed on the client, and some of the data used in the calculations is stored on the client.

In a possible implementation form of the second aspect, the server is assigned the at least one model prior to utilizing the model(s), the act of assigning comprising one of selecting a random model or a previously known model, allowing use of either a new model or a previously used model as the starting point for the calculations.

In a further possible implementation form of the second aspect, the server is configured to generate the new updated model(s) by means of: determining several of the clients, each determined client being configured to calculate updated model(s) by means of the downloaded model(s) and the local client data set, and to upload the updated model(s) to the server, receiving updated model(s) uploaded by at least one of the determined clients, calculating the new updated model by means of averaging the received, updated model(s).

A server, comprising these features, allows for a machine learning process which is efficient, since it has access to the client data of all clients connected to a server, as well as secure, since the client data related to an individual client remains on the very same. Since the server, connected to the client, does not have to collect or store large amounts of client data, the process is time- and cost-effective as well.

In a further possible implementation form of the second aspect, the server is configured to generate the new updated model(s) by means of: determining several of the clients, each determined client being configured to calculate an update for each model by means of the local client data set, and to upload the update(s) to the server, receiving the update(s) uploaded by at least one of the determined clients, calculating the new updated model by means of the model and an aggregate of the received updates.

As mentioned above, a server, comprising these features, allows for a machine learning process which is efficient as well as secure. Since the client does not have to download or upload entire models from the server, the process is particularly effective.

According to an aspect, there is provided a machine learning client-server system adapted for generating personalized item recommendations for a user of a client, the client-server system comprising a plurality of clients, described above, and a server, described above. A client-server system, comprising these features, allows efficient and secure generation of personalized item recommendations since some of the calculations, necessary for generating personalized item recommendations, are executed on the client, and some of the data used in the calculations is stored on the client.

These and other aspects will be apparent from the embodiments described below.

BRIEF DESCRIPTION OF THE DRAWINGS

In the following detailed portion of the present disclosure, the aspects, embodiments and implementations will be explained in more detail with reference to the example embodiments shown in the drawings, in which:

Fig. 1 is a schematic drawing of a client-server system according to one embodiment of the present disclosure.

Fig. 2 is a schematic drawing of a client-server system according to a further embodiment of the present disclosure.

DETAILED DESCRIPTION

As mentioned in the background section, a client-server system is a structure in which the tasks of the system are divided between the provider of a service, i.e. a server, and service requesters, i.e. clients such as mobile phones or tablets. The service to be provided may be a video service, all of the user data associated with the video service being stored on the server.

Prior art model building comprises sending personal user data from a client to a central server where the data is processed, models are built, and results are generated and sent back to the client. The results may, e.g., be an estimate to be used for generating recommendations of one or several specific items, taken from a larger set of items, which specific items are predicted, by one or several models, to be of interest to the user of the client. An item is, e.g., a video available for viewing, an application available for downloading, or a physical object such as a piece of clothing available for purchase.

The number of clients as well as available items is usually very large, and are preferably collected in a client-item matrix $R = (r_{ij}) \in R^{N \times M}$, N being the maximum number of clients i connected to the server, and M being the maximum number of items j available on the server.

Given the number of clients N can be several million, and the number of items M several thousand, the client-item matrix R may be sparse with many elements $r_{ij}$ unspecified. One object of the present disclosure is to replace such unspecified elements with their estimates $\widehat{r_{ij}}$ .

Contrary to prior art, and due to technological advancement such as a general increase in computational ability of clients, the present disclosure generates such estimates while still maintaining all personal user data on the client, i.e.

personal user data is neither used nor stored on a central server. Hence, the amount of data to be transferred to, and stored on, the server is reduced, and issues related to data collection and user privacy are avoided. The elements $r_{ij}$ as well as the estimates $\widehat{r_{ij}}$ are used for generating personalized item recommendations.

The above is achieved, in part, by means of Collaborative Filtering. In short, in Collaborative Filtering a model is built from a user's past behavior, such as items previously purchased or selected and/or numerical ratings given to those items by the user, as well as similar decisions made by other users. This model is then used to predict which other items the user may have an interest in. Collaborative Filtering is one of the most used models to generate recommendations for a user, either independently or in combination with other types of models such as, e.g., Predictive Modeling. Predictive Modeling is, preferably, used to apply a predictive score, such as a rating, to the above-mentioned estimates $\widehat{r_{ij}}$.

In prior art, these models both require gathering all data to be used in building the model to be collected in a centralized server.

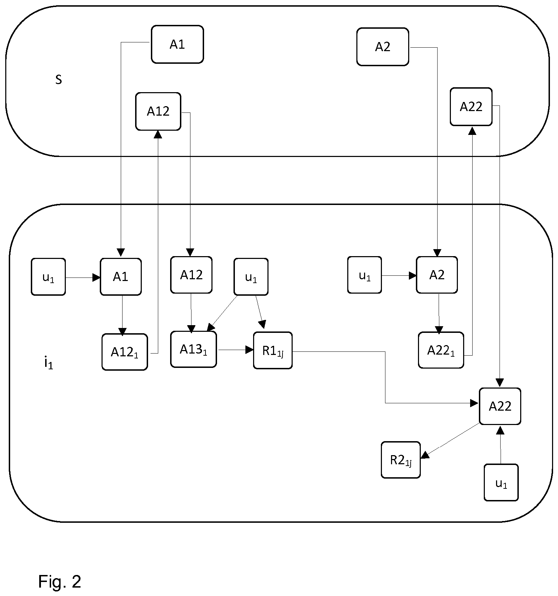

As previously mentioned, the number of clients as well as the number of items is usually very large, wherefore a combination of models may be used to provide only relevant, personalized item recommendations to the user of a specific client i. As an example, shown also in Fig. 2, a Collaborative Filtering model A1 may be used to generate a first set of item recommendations $R1_{ij}$, a so-called candidate set comprising some, if not all, of the above-mentioned elements $r_{ij}$ and estimates $\widehat{r_{ij}}$, whereafter a Predictive Modeling model A2 may be used to create the final, usable recommendations $R2_{ij}$ by scoring the initially recommended items $R1_{ij}$ and sorting them by weight.

The estimates $\widehat{r_{ij}}$ may be based on implicit and/or explicit feedback from not only the specific client but a plurality of clients, in one embodiment all possible clients. Implicit feedback comprises actions taken by the user, e.g. downloading an application. Explicit feedback comprises user reviews of items. Collaborative Filtering only uses these two kinds of data, while the above-mentioned Predictive Modeling may use additional kinds of explicit feedback such as demographics, behavioral data, other user activity related data such as where and when an item was interacted with and what kind of device was used, and also personal user data such as name and login data.

The basis of all Collaborative Filtering recommender systems is the above-mentioned client-item matrix $R = (r_{ij}) \in R^{N \times M}$. For the sake of simplicity, the description below will at times equate a client i with its user, and an item j with an application available for downloading.

In Collaborative Filtering, the value $r_{ij}$ is derived from explicit feedback such as user reviews, e.g. $r_{ij} \in (1, \dots, 5)$.

In the case of implicit feedback such as, e.g., the user downloading an application, $r_{ij}=1$ when user/client i downloaded application/item j, where $1 \leq i \leq N$ and $1 \leq j \leq M$, while $r_{ij}$ is unspecified otherwise.

Collaborative Filtering is used to replace the unspecified $r_{ij}$ with their estimates $\widehat{r_{ij}}$, e.g. by means of Matrix Factorization.

$$x_i = \begin{pmatrix} x_{i1} \\ x_{i2} \\ \cdot \\ \cdot \\ \cdot \\ x_{ik} \end{pmatrix}$$

Matrix Factorization involves creating a client factor vector $x_i \in R^{k \times 1}$, , for each client i, and an

$$y_j = \begin{pmatrix} y_{j1} \\ y_{j2} \\ \cdot \\ \cdot \\ \cdot \\ y_{jk} \end{pmatrix}$$

item factor vector $y_j \in R^{k \times 1}$, , for each item j. k is the number of factors, which is typically much lower than both M and N. The estimate for an unspecified $r_{ij}$ is then given by $\widehat{r_{ij}} = x_i^T y_j$.

The first model A1 is a factor matrix $A1 = X(i, k)$ comprising a plurality of client factor vectors ($x_i$), and the second model A2 is a factor matrix $A2 = Y(j, k)$ comprising a plurality of item factor vectors ($y_j$).

The client factor vectors are collected into a matrix $X \in R^{k \times M}$ where $X=(x_1, x_2, \dots, x_i, \dots, x_M)$, and the item factor vectors are collected into a matrix $Y \in R^{k \times N}$ where $Y=(y_1, y_2, \dots, y_j, \dots, y_N)$. The client-item matrix R is, in other words, also defined as $R = X^T Y$.

For the case of explicit feedback, a set of binary variables $p_{ij}$ are introduced to indicate whether the user/client i

$$p_{ij} \begin{cases} 1 & r_{ij} > 0 \\ 0 & r_{ij} = 0 \end{cases}$$

has rated an application/item j or not, where . A value $p_{ij}>0$ means that the application/item j has been rated, while a value $p_{ij}=0$ means that the user has not rated the application/item j or is simply not aware an application/item j exists.

For the case of implicit feedback, a set of binary variables $p_{ij}$ are introduced to indicate the preference of

$$p_{ij} \begin{cases} 1 & r_{ij} > 0 \\ 0 & r_{ij} = 0 \end{cases}$$

user/client i for application/item j, where . A value $p_{ij}=0$ can have many interpretations including the user/client i not being interested in an application/item j or not being aware an application/item j exists. To account for this, a confidence parameter $c_{ij}$ is introduced, defined as $c_{ij} = 1+\propto r_{ij}$ where $\alpha>0$. The implicit feedback problem is, in other words, different from the standard explicit feedback problem in that the confidence levels $c_{ij}$ need to be taken into account.

Any updates are to be made across all clients i and all items j rather than just the clients i for which there are downloads j.

In prior art Collaborative Filtering models, $x_i$ is updated by means of the equation $x_i = (YC^iY^T + \lambda I)^{-1}YC^ip(i)$, where Y, $Y \in R^{k \times N}$, is the above-mentioned matrix of item factor vectors, $C^i$ is a diagonal matrix with $C_{jj}^i = c_{ij}$, I is an identity matrix, and $p(i) \in R^{N \times 1}$ is a binary preference variable vector for the client i.

Similarly, $y_j$ is updated by means of the equation $y_j = (XC^jYX^T + \lambda I)^{-1}XC^jp(j)$ where X, $X \in R^{k \times M}$, is the above-mentioned matrix of client factor vectors, $C^j$ is a diagonal matrix with $C_{ii}^j = c_{ij}$, and $p(i) \in R^{N \times 1}$ is a binary preference variable vector for the client i.

In summary, the above described prior art method uses Y for calculating X, and X for calculating Y, repeating and alternating between the two equations at least until a suitable convergence criteria is met. The convergence criteria is a predefined limit value, for example as 1 %. C and p, which are based on user/client data, are used for calculating both X and Y, wherefore all user data has to be located in the same place as X and Y, i.e. on the server. This is referred to as the ALS (Alternating Least Squares) method for Collaborative Filtering, and it is frequently used in prior art.

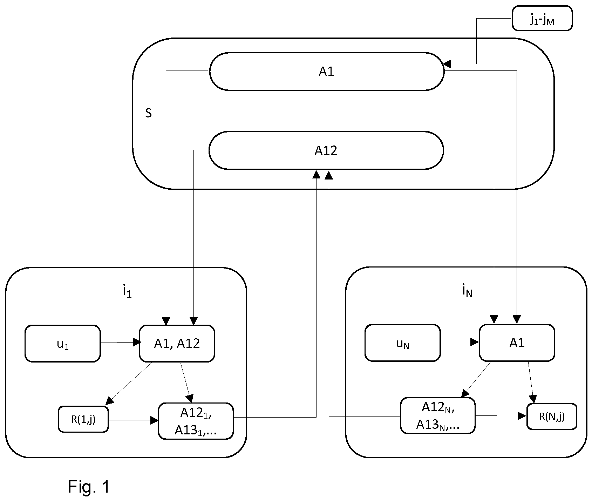

The embodiments of the present disclosure, shown schematically in Fig. 1, comprises an adaptation of the ALS method such that a different approach is taken to calculating Y, which adaptation allows the calculations to be distributed to the client, hence avoiding the need to transfer client data back to the server. All item factor vectors $y_j \in R^{k \times 1}$ are located on the server, updated on the server, and thereafter distributed to each client i. All client factor vectors $x_i \in R^{k \times 1}$ remain on the client i, are updated on the client using local client data $u_i$, and the item factor vectors from the server. The updates are calculated from item j on each client i and transmitted to the server where they are aggregated and the $y_j$ are updated.

All of the values necessary for calculating $x_i = (YC^iY^T + \lambda I)^{-1}YC^ip(i)$ are available on the client i, as long as a current set of item factor vectors $y_j \in R^{k \times 1}$ have been downloaded onto the client i, Y being the matrix of item factor vectors, $C^i$ a diagonal matrix with $C_{jj}^i = c_{ij}$, $\lambda$ the regularization factor, I an identity matrix, and $p(i) \in R^{N \times 1}$ is a binary preference variable vector for the client i. Furthermore, all of these values are independent from the corresponding values of any other client i. Hence, what corresponds to a first step of the ALS algorithm can be calculated on each individual client i without reference to any other client.

However, when using the ALS method, the calculation of $y_j$, $y_j = (XC^jYX^T + \lambda I)^{-1}XC^jp(j)$, requires the matrix of client factor vectors X, wherefore this update must take place on the server where all client data is available. Rather than directly calculating an update of $y_j$, as in the ALS method, the present disclosure applies a gradient descent approach to calculate the updated $y_j$ on the server. More specifically, the present disclosure calculates the updated $y_j$, i.e. the updated matrix Y, by means of equation $y_j = y_j - \gamma \frac{\partial J}{\partial y_j}$, $\gamma$ being a gain function and $\partial J/\partial y_j$ being calculated by means of equation $\frac{\partial J}{\partial y_j} = -2 \sum_i [c_{ij} (p_{ij} - x_i^T y_j)] x_i + 2\lambda y_j$.

The above-mentioned equation $\frac{\partial J}{\partial y_j}$ originates from the cost function J, $J = \sum_i \sum_j c_{ij} (p_{ij} - x_i^T y_j)^2 + \lambda(\sum_i \|x_i\|^2 + (\sum_j \|y_j\|^2))$, where $\lambda$ is the regularization factor. The cost function J is minimized by alternating the calculations of the client factor vector matrix X and the item factor vector matrix Y. The first step of minimizing the cost function J is to differentiate J with regards to $x_i$ for all clients i and $y_j$ for all items j, by means of $\partial J / \partial x_i$ and $\partial J / \partial y_j$.

The initial starting value of $x_i$ is calculated directly by means of $\frac{\partial J}{\partial x_i} = 0$, $x_i = (YC^iY^T + \lambda I)^{-1} YC^i p(i)$ as in the ALS method, which is possible since, as mentioned above, the values necessary are available on the client i.

$\partial J / \partial y_j$, on the other hand, comprises a component which is a summation over all clients i, said summation being defined as f(i,j). f(i,j) is calculated on the client, based only on client data, by means of $f(i,j) = [c_{ij}(p_{ij} - x_i^T y_j)]x_i$, i.e. f(i,j) is calculated on each client i, independently of all other clients.

Each client i reports back, to the server, an evaluation of the value f(i,j) calculated for each item j, whereafter all of the client evaluations are summarized, on the server, by means of $\frac{\partial J}{\partial y_j} = -2 \sum_i f(i,j) + 2\lambda y_j$ and thereafter applied to $y_j = y_j - \gamma \frac{\partial J}{\partial y_j}$.

The present disclosure relates, in other words, to training at least one model, e.g. a Collaborative Filtering model A1, without having to transfer user data from the client to the server, and at the same time using the model A1 to calculate estimates $\widehat{r_{ij}}$ for the unspecified elements of the client-item matrix R, the estimates to be used for generating personalized recommendations. As shown in Fig. 1, the machine learning model A1 is initially located on a centralized server, and distributed to each user device/client i. The initial model A1 is updated, on each client i, using model A1 and client data $u_i$ located on the client. Updates $dA1_i$, or complete updated models $A12_i$, generated on each user device/client, are transferred back to the server where they are aggregated across all determined clients to generate a new model component A12, which in turn is downloaded to the clients i and updated to form model $A13_i$.

By model is meant either an entire model, or a part of a model. In the latter case, the model comprises at least two parts A1, A2. One individual part $A1_i$ is assigned to the client, and one part A2 is downloaded to the client i from the server. The individual part $A1_i$ is updated by means of the downloaded server part and an element of local client data $u_i$, resulting in an updated individual part $A12_i$. An individual value for each item j is calculated on the client using the downloaded server part A2, the updated individual part $A12_i$, and the element of local client data $u_i$. An evaluation of the value is uploaded to the server, from each client, such that the server part can be updated by means of an aggregate of such evaluations, forming updated server part A22. The updated server part A22 is downloaded to the clients, and yet a further updated individual part $A13_i$ is calculated on the client, by means of the downloaded updated server part A22 and an element of local client data $u_i$. Thereafter, at least one unspecified element of the client-item matrix R can be updated, by replacing the unspecified element with its estimate, by means of the further updated individual part $A13_i$ and the updated server part A22.

The model $A13_i$, stored locally on the client i, and the client data $u_i$ are used for calculating estimates replacing unspecified elements of the client-item matrix R. Hence the client data $u_i$ never leaves the client i. The updated client-item matrix R is, in other words, used to generate a first recommendation set $R1_{ij}$.

A further model, such as Predictive Modeling, is used to select, rescore, sort, and subsequently narrow down, the first recommendation set $R1_{ij}$ to a second recommendation set $R2_{ij}$.

One aspect of the present disclosure relates to a client adapted for generating personalized item recommendations for a user of the client i. The client is connected to a server utilizing a global set of items $j_1,...,j_M$ and at least one model A1,...,AK. The client i is configured to utilize at least one model A1,...,AK downloaded from the server, and to generate a recommendation set $R_{ij}$, comprising at least one $j_p$ of the items $j_1,...,j_M$, by means of at least one of the downloaded model(s) A1,...,AK and a local client data set $u_i$ stored on the client i, as shown in Fig. 1.

The model(s) A1,...,AK comprise Collaborative Filtering, Predictive Modeling, and/or Deep Learning Models. The client data set $u_i$ comprises implicit user feedback and/or explicit user feedback.

The recommendation set $R_{ij}$ is generated by means of a combination of two models A1, A2 and the client data set $u_i$, wherein one model A1 is Collaborative Filtering and the other model A2 is Predictive Modeling.

The recommendation set $R_{ij}$ comprises a first recommendation set $R1_{ij}$ generated by means of one model A1, A12, A13 and the client data set $u_i$, and a second recommendation set $R2_{ij}$ generated by means of a further model A2, A22, the first recommendation set $R1_{ij}$, and the client data set $u_i$. This is shown schematically in Fig. 2.

Generating the second recommendation set $R2_{ij}$ comprises selecting and scoring individual items $j_p$ of the first recommendation set $R1_{ij}$.

The client i may be configured to update each downloaded model by means of the following steps, shown schematically in Figs. 1 and 2:

A. calculate an updated model $A12_i,...,AK2_i$ by means of the downloaded model $A1,...,AK$ and the local client data set $u_i$,

B. upload the updated model $A12_i,...,AK2_i$ to the server, wherein the updated model $A12_i,...,AK2_i$ is used for the server calculating a new updated model $A12,...,AK2$,

C. download the new updated model $A12,...,AK2$ from the server,

D. calculate at least one further updated model $A13_i,...,AK3_i$ by means of the new updated model $A12,...,AK2$ and the local client data set $u_i$.

The model A may be updated, on the client, as mentioned in steps A and D above. The updating is executed, when the model is a Collaborative Filtering model, by means of equation $x_i = (Yp(i)Y^T + \lambda I)^{-1}YR^i p(i)$, wherein p(i) is a binary preference variable vector for the client i, $R^i$ is a vector of known inputs for client i, I is an identity matrix, and $\lambda$ is a regularization parameter.

The model A may be updated, on the server, as mentioned in step B above. The updating is executed by averaging the updated models which were uploaded to the server, also in step B.

The client (i) may further be configured to calculate at least one update for each model by means of the following steps:

A. calculate an update $dA1_i,...,dAK_i$ for each downloaded model $A1,...,AK$ by means of the local client data set $u_i$,

B. upload the update $dA1_i,...,dAK_i$ to the server, wherein the update $dA1_i,...,dAK_i$ is used for the sever calculating an updated model $A12,...,AK2$,

C. download the updated model $A12,...,AK2$ from the server,

D. calculate a new update $dA12_i,...,dAK2_i$ for the updated model $A12,...,AK2$ by means of the local client data set $u_i$,

E. calculate at least one further updated model $A13_i,...,AK3_i$ by means of the updated model $A12,...,AK2$, the new update $dA12_i,...,dAK2_i$ and the local client data set $u_i$.

Calculating an update $dA1_{i1},...,dAK_i$, $dA12_{i1},...,dAK2_i$ comprises calculating a value for each item $j_1,...,j_M$ by means of a function f(i,j).

The model A may be updated, on the client, as mentioned in steps A, D, and E above. The updating, when the model is a Collaborative Filtering model, is executed by means of equation $x_i = (Yp(i)Y^T + \lambda I)^{-1}YR^i p(i)$, wherein p(i) is a binary preference variable vector for the client i, $R^i$ is a vector of known inputs for client i, I is an identity matrix, and $\lambda$ is a regularization parameter.

The model A may be updated, on the server, as mentioned in step B above. The updating is executed by means of equation $$y_j = y_j - \gamma \frac{\partial J}{\partial y_j}$$ , wherein $\gamma$ is a gain function. Each model A, e.g A1, has a cost function J1 which is to be minimized with respect to the model parameter y. $\frac{\partial J}{\partial y_j}$ is given by the sum of $dA1_i$, i.e. the dA1 provided by clients $i_1$-$i_N$.

The client i is further configured to generate a recommendation set $R_{ij}$ by means of the further updated model $A13_i,...,AK3_i$ and the local client data set $u_i$.

A further aspect of the present disclosure relates to a server adapted for assisting in generating personalized item recommendations for a user of a client i, on the client i, the server being configured to utilize a global set of items $j_1,...,j_M$ and at least one model $A1,...,AK$. The server is connected to a plurality of clients $i_1,...,i_N$, each client i being configured to download the model(s) $A1,...,AK$, and generate updated model(s) $A12_i,...,AK2_i$ or updates $dA1_i,...,dAK_i$ for the model(s) $A1,...,AK$. The server is further configured to: generate new updated model(s) $A12,...,AK2$ by means of updated models $A12_i,...,AK2_i$ or updates $dA1_i,...,dAK_i$ uploaded by at least one of the clients $i_1,...,i_N$, and transmit the new updated model(s) $A12,...,AK2$ to the plurality of clients $i_1,...,i_N$. The new updated model(s) $A12,...,AK2$ and a local client data set $u_i$, stored on the client i, are utilized for each client i generating the personalized item recommendations. This is shown schematically in Figs. 1 and 2

The server is assigned the at least one model $A1,...,AK$ prior to utilizing the model(s), the act of assigning comprising one of selecting a random model or a previously known model.

The server may be configured to generate the new updated model(s) by means of the following steps:

A. determine several of the clients $i_1,...,i_N$, each determined client i being configured to calculate updated model(s) $A12_i,...,AK2_i$ by means of the downloaded model(s) $A1,...,AK$ and the local client data set $u_i$, and to upload the updated model(s) $A12_i,...,AK2_i$ to the server,

B. receive updated model(s) $A12_i,...,AK2_i$ uploaded by at least one of the determined clients $i_1,...,i_N$,

C. calculate the new updated model $A12,...,AK2$ by means of averaging the received, updated model(s) $A12_i,...,AK2_i$.

The server may furthermore be configured to generate the new updated model(s) by means of the following steps:

A. determine several of the clients $i_1,...,i_N$, each determined client i being configured to calculate an update $dA1_i,...,dAK_i$ for each model A1,...,AK by means of the local client data set $u_i$, and to upload the update(s) $dA1_i,...,dAK_i$ to the server,
B. receive the update(s) $dA1_i,...,dAK_i$ uploaded by at least one of the determined clients $i_1,...,i_N$,
C. calculate the new updated model A12,...,AK2 by means of the model A1,...,AK and an aggregate of the received updates $dA1_i,...,dAK_i$.

The model A may be updated, on the server, as mentioned in step C above. The updating is executed by means of

$$y_j = y_j - \gamma \frac{\partial J}{\partial y_j}$$

equation , wherein $\gamma$ is a gain function.

Yet another aspect of the present disclosure relates to a machine learning client-server system adapted for generating personalized item recommendations directed towards the user of a client i. The system comprises the above-mentioned server and a plurality of the above-mentioned clients.

Fig. 1 shows the flow of information in a client-server system adapted for updating a client-item matrix R schematically. Value f(i,j), for item j, is calculated on the client i using local user data $u_i$. The values f(i,j) for a plurality of items j, comprised in updated model $A12_i$, are transmitted back to the server S, from a plurality of clients, and aggregated, whereafter initial model A1 is updated to model A12. Hence, no local client data $u_i$ need be transferred out of the client i to update model A1. The same procedure is thereafter executed for at least model A12, resulting in a model $A13_i$ on each client i, which model is used for generating personalized item recommendations directed towards the user of a client i.

The system comprises one server S and a N number of clients i. For the sake of simplicity, Fig. 1 shows only two clients, $i_1$ and $i_N$, i.e. $i_N$ equals $i_2$. Client $i_1$ utilizes local client data $u_i$, i.e. $u_1$, as well as downloaded model A1. Similarly, client $i_2$ utilizes local client data $u_2$, as well as model A1.

Fig 2 similarly shows the flow of information in a client-server system comprising one server S, one client $i_1$, and which utilizes two models A1, A2 for generating personalized item recommendations.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

**Claims**

1. A system comprising a plurality of clients and a server adapted for assisting in generating personalized item recommendations for a user of a client (i) within the plurality of clients, on the client (i),

said server being configured to utilize a global set of items ($j_1,...,j_M$) and at least one model (A1,...,AK),
said server being connected to the plurality of clients ($i_1,...,i_N$), each client (i) being configured to download said at least one model (A1,...,AK), and generate at least one updated model ($A12_i,...,AK2_i$) or updates ($dA1_i,...,dAK_i$) for said at least one model (A1,...,AK) using a local client data set ($u_i$),
wherein the plurality of clients and the available items are collected in a client-item matrix $R = (r_{ij}) \in R^{N \times M}$, N being the maximum number of clients (i) connected to the server, and M being the maximum number of items (j) available on the server,
the client-item matrix R being sparse with many elements $r_{ij}$ unspecified,
said server further being configured to:

generate at least one new updated model (A12,...,AK2) by means of updated models ($A12_i,...,AK2_i$) or updates ($dA1_i,...,dAK_i$) uploaded by at least one of said clients ($i_1,...,i_N$), and transmit said new updated model(s) (A12,...,AK2) to said plurality of clients ($i_1,...,i_N$), wherein said new updated model(s) (A12,...,AK2) and the local client data set ($u_i$), stored on said client (i), are utilized for each client (i) generating said personalized item recommendations;
wherein said client data set ($u_i$) comprises implicit user feedback and/or explicit user feedback, the implicit feedback comprising actions taken by the user, comprising downloading an application, the explicit feedback comprising user reviews of items, and

wherein unspecified elements in the client-item matrix are replaced by estimates and the estimates are based on the implicit and/or the explicit feedback from a plurality of users, and

wherein Collaborative Filtering is used to replace the unspecified elements with their estimates.

2.  The system according to claim 1
    wherein said server is assigned said at least one model (A1,...,AK) prior to utilizing said at least one model, the act of assigning comprising one of selecting a random model or a previously known model.

3.  The system according to claim 1 or 2, wherein said server is configured to generate said at least one new updated model by means of the following steps:

    A. determine several of said clients ($i_1,...,i_N$), each determined client (i) being configured to calculate at least one updated model ($A12_i,...,AK2_i$) by means of said at least one updated model (A1,...,AK) and said local client data set ($u_i$), and to upload said at least one updated model ($A12_i,...,AK2_i$) to said server,
    B. receive at least one updated model ($A12_i,...,AK2_i$) uploaded by at least one of said determined clients ($i_1,...,i_N$),
    C. calculate said new updated model (A12,...,AK2) by means of averaging said at least one received, updated model ($A12_i,...,AK2_i$).

4.  The system according to claim 1 or 2, wherein said server is configured to generate said at least one updated model by means of the following steps:

    A. determine several of said clients ($i_1,...,i_N$), each determined client (i) being configured to calculate an update ($dA1_i,...,dAK_i$) for each model (A1,...,AK) by means of said local client data set ($u_i$), and to upload said updates ($dA1_i,...,dAK_i$) to said server,
    B. receive said updates ($dA1_i,...,dAK_i$) uploaded by at least one of said determined clients ($i_1,...,i_N$),
    C. calculate said new updated model (A12,...,AK2) by means of said model (A1,...,AK) and an aggregate of said received updates ($dA1_i,...,dAK_i$).

5.  The system according to any one of the previous claims, wherein said recommendation set ($R_{ij}$) is generated by means of a combination of two models (A1, A2) and said client data set ($u_i$), wherein one model (A1) is Collaborative Filtering and the other model (A2) is Predictive Modeling.

6.  The system according to any one of the previous claims, wherein said recommendation set ($R_{ij}$) comprises a first recommendation set ($R1_{ij}$) generated by means of one model (A1, A12, A13) and said client data set ($u_i$), and a second recommendation set ($R2_{ij}$) generated by means of a further model (A2, A22), said first recommendation set ($R1_{ij}$), and said client data set ($u_i$).

7.  The system according to claim 6, wherein generating said second recommendation set ($R2_{ij}$) comprises selecting and scoring individual items ($j_p$) of said first recommendation set ($R1_{ij}$).

**Patentansprüche**

1.  System, umfassend eine Vielzahl von Clients und einen Server, angepasst zum Unterstützen bei dem Erzeugen von personalisierten Artikelempfehlungen für einen Benutzer eines Clients (i) innerhalb der Vielzahl von Clients, auf dem Client (i),

    wobei der Server dazu konfiguriert ist, einen globalen Satz von Artikeln ($j_1,...,j_M$) und mindestens ein Modell (A1, ..., AK) einzusetzen,
    wobei der Server mit der Vielzahl von Clients ($i_1,...,i_N$) verbunden ist, wobei jeder Client (i) dazu konfiguriert ist, das mindestens eine Modell (A1,...,AK) herunterzuladen und mindestens ein aktualisiertes Modell ($A12_i,...,AK2_i$) oder Aktualisierungen ($dA1_i,...,dAK_i$) für das mindestens eine Modell (A1, ...,AK) unter Verwendung eines lokalen Client-Datensatzes ($u_i$) zu erzeugen,
    wobei die Vielzahl von Clients und die verfügbaren Artikel in einer Client-Artikel-Matrix $R = (r_{ij}) \in R^{N \times M}$ gesammelt werden,
    wobei N die maximale Anzahl von Clients (i) ist, die mit dem Server verbunden sind, und M die maximale Anzahl von Artikeln (j) ist, die auf dem Server verfügbar sind,
wobei die Client-Artikel-Matrix R spärlich mit vielen nicht spezifizierten Elementen $r_{ij}$ besetzt ist, wobei der Server ferner zu Folgendem konfiguriert ist:

Erzeugen mindestens ein neues aktualisiertes Modell (A12, ...,AK2) durch aktualisierte Modelle (A12$_i$,...,AK2$_i$) oder Aktualisierungen (dA1$_i$,...,dAK$_i$), die durch mindestens einen der Clients ($i_1$,...,$i_N$) hochgeladen werden, und

Übertragen des/der neuen aktualisierten Modells/Modelle (A12, ...,AK2) an die Vielzahl von Clients ($i_1$,...,$i_N$), wobei das/die neue(n) aktualisierte(n) Modell(e) (A12,...,AK2) und der lokale Client-Datensatz ($u_i$), der auf dem Client (i) gespeichert ist, dazu eingesetzt werden, dass jeder Client (i) die personalisierten Artikelempfehlungen erzeugt;

wobei der Client-Datensatz ($u_i$) implizites Benutzer-Feedback und/oder explizites Benutzer-Feedback umfasst, wobei das implizite Feedback Aktionen umfasst, die durch den Benutzer vorgenommen werden, umfassend das Herunterladen einer Anwendung, wobei das explizite Feedback Benutzerbewertungen von Artikeln umfasst, und

wobei nicht spezifizierte Elemente in der Client-Artikel-Matrix durch Schätzungen ersetzt werden und die Schätzungen auf dem impliziten und/oder dem expliziten Feedback einer Vielzahl von Benutzern basieren, und

wobei Kollaboratives Filtern verwendet wird, um die nicht spezifizierten Elemente durch ihre Schätzungen zu ersetzen.

2. System gemäß Anspruch 1, wobei der Server dem mindestens einen Modell (A1,...,AK) vor dem Einsetzen des mindestens einen Modells zugewiesen wird,
wobei der Vorgang des Zuweisens eines von Auswählen eines Zufallsmodells oder eines zuvor bekannten Modells umfasst.

3. System gemäß Anspruch 1 oder 2, wobei der Server dazu konfiguriert ist, das mindestens eine neue aktualisierte Modell durch folgende Schritte zu erzeugen:

A. Bestimmen mehrerer der Clients ($i_1$,...,$i_N$), wobei jeder bestimmte Client (i) dazu konfiguriert ist, mindestens ein aktualisiertes Modell (A12$_i$,...,AK2$_i$) durch das mindestens eine aktualisierte Modell (A1, ...,AK) und den lokalen Client-Datensatz ($u_i$) zu berechnen und das mindestens eine aktualisierte Modell (A12$_i$,...,AK2$_i$) auf den Server hochzuladen,
B. Empfangen mindestens eines aktualisierten Modells (A12$_i$,...,AK2$_i$), das durch mindestens eines der bestimmten Clients ($i_1$,...,$i_N$) hochgeladen wird,
C. Berechnen des neuen aktualisierten Modells (A12,...,AK2) durch Mitteln des mindestens einen empfangenen, aktualisierten Modells (A12$_i$,...,AK2$_i$).

4. System gemäß Anspruch 1 oder 2, wobei der Server dazu konfiguriert ist, das mindestens eine aktualisierte Modell durch folgende Schritte zu erzeugen:

A. Bestimmen mehrerer der Clients ($i_1$,...,$i_N$), wobei jeder bestimmte Client (i) dazu konfiguriert ist, eine Aktualisierung (dA1$_i$,...,dAK$_i$) für jedes Modell (A1,...,AK) durch den lokalen Client-Datensatz ($u_i$) zu berechnen und die Aktualisierungen (dA1$_i$,...,dAK$_i$) auf den Server hochzuladen,
B. Empfangen der Aktualisierungen (dA1$_i$,...,dAK$_i$), die durch mindestens eines der bestimmten Clients ($i_1$,...,$i_N$) hochgeladen werden,
C. Berechnen des neuen aktualisierten Modells (A12,...,AK2) durch das Modell (A1, ...,AK) und ein Aggregat der empfangenen Aktualisierungen (dA1$_i$,...,dAK$_i$).

5. System gemäß einem der vorhergehenden Ansprüche, wobei der Empfehlungssatz ($R_{ij}$) durch eine Kombination von zwei Modellen (A1, A2) und dem Client-Datensatz ($u_i$) erzeugt wird, wobei ein Modell (A1) Kollaboratives Filtern ist und das andere Modell (A2) Vorhersagemodellierung ist.

6. System gemäß einem der vorhergehenden Ansprüche, wobei der Empfehlungssatz ($R_{ij}$) einen ersten Empfehlungssatz ($R1_{ij}$), der durch ein Modell (A1, A12, A13) und den Client-Datensatz ($u_i$) erzeugt wird, und einen zweiten Empfehlungssatz ($R2_{ij}$) umfasst, der durch ein weiteres Modell (A2, A22), den ersten Empfehlungssatz ($R1_{ij}$) und den Client-Datensatz ($u_i$) erzeugt wird.

**7.** System gemäß Anspruch 6, wobei das Erzeugen des zweiten Empfehlungssatzes ($R2_{ij}$) Auswählen und Punkte-vergeben für einzelne Artikel ($j_P$) des ersten Empfehlungssatzes ($R1_{ij}$) umfasst.

**Revendications**

**1.** Système comprenant une pluralité de clients et un serveur conçu pour aider à générer des recommandations d'articles personnalisées pour un utilisateur d'un client (i) parmi la pluralité de clients, sur le client (i),

ledit serveur étant configuré pour utiliser un ensemble global d'articles ($j_1,...,j_M$) et au moins un modèle (A1,...,AK),
ledit serveur étant connecté à la pluralité de clients ($i_1,...,i_N$), chaque client (i) étant configuré pour télécharger ledit au moins un modèle (A1,...,AK), et générer au moins un modèle mis à jour ($A12_i,...,AK2_i$) ou des mises à jour ($dA1_i,...,dAK_i$) dudit au moins un modèle (A1,...,AK) à l'aide d'un ensemble de données client local ($u_i$),
dans lequel la pluralité de clients et les articles disponibles sont collectés dans une matrice client-article $R = (r_{ij}) \in R^{N \times M}$, N étant le nombre maximal de clients (i) connectés au serveur, et M étant le nombre maximal d'articles (j) disponibles sur le serveur,
la matrice client R étant éparse avec de nombreux éléments $r_{ij}$ non spécifiés, ledit serveur étant également configuré pour :

générer au moins un nouveau modèle mis à jour (A12, ...,AK2) à l'aide de modèles mis à jour ($A12_i,...,AK2_i$) ou de mises à jour ($dA1_i,...,dAK_i$) téléchargées par au moins l'un desdits clients ($i_1,...,i_N$), et
transmettre ledit ou lesdits nouveaux modèles mis à jour (A12,...,AK2) à ladite pluralité de clients ($i_1,...,i_N$),
dans lequel ledit ou lesdits nouveaux modèles mis à jour (A12,...,AK2) et l'ensemble de données client local ($u_i$), stockés sur ledit client (i), sont utilisés pour chaque client (i) générant lesdites recommandations d'articles personnalisées ;
dans lequel ledit ensemble de données client ($u_i$) comprend une rétroaction implicite d'utilisateur et/ou une rétroaction explicite d'utilisateur, la rétroaction implicite comprenant des actions entreprises par l'utilisateur, comprenant le téléchargement d'une application, la rétroaction explicite comprenant des revues d'utilisateur d'articles, et
dans lequel les éléments non spécifiés dans la matrice client-élément sont remplacés par des estimations et les estimations sont basées sur la rétroaction implicite et/ou explicite d'une pluralité d'utilisateurs, et
dans lequel le filtrage collaboratif est utilisé pour remplacer les éléments non spécifiés par leurs estimations.

**2.** Système selon la revendication 1, dans lequel ledit serveur est affecté audit au moins un modèle (A1,...,AK) préalablement à l'utilisation dudit au moins un modèle,
l'action d'affectation comprenant une sélection d'un modèle aléatoire ou d'un modèle connu antérieurement.

**3.** Système selon la revendication 1 ou 2, dans lequel ledit serveur est configuré pour générer ledit au moins un nouveau modèle mis à jour au moyen des étapes suivantes :

A. la détermination de plusieurs desdits clients ($i_1,...,i_N$), chaque client (i) déterminé étant configuré pour calculer au moins un modèle mis à jour ($A12_i,...,AK2_i$) au moyen dudit au moins un modèle mis à jour (A1,...,AK) et dudit ensemble de données de client local ($u_i$), et pour télécharger ledit au moins un modèle mis à jour ($A12_i,...,AK2_i$) vers ledit serveur,
B. la réception d'au moins un modèle mis à jour ($A12_i,...,AK2_i$) téléchargé par au moins l'un desdits clients déterminés ($i_1,...,i_N$),
C. le calcul du nouveau modèle mis à jour (A12,...,AK2) au moyen d'une moyenne dudit au moins un modèle reçu mis à jour ($A12_i,...,AK2_i$).

**4.** Système selon la revendication 1 ou 2, dans lequel ledit serveur est configuré pour générer ledit au moins un modèle mis à jour au moyen des étapes suivantes :

A. la détermination de plusieurs desdits clients ($i_1,...,i_N$), chaque client (i) déterminé étant configuré pour calculer une mise à jour ($dA1_i,...,dAK_i$) pour chaque modèle (A1,...,AK) au moyen dudit ensemble de données de client local ($u_i$), et pour télécharger lesdites mises à jour ($dA1_i,...,dAK_i$) vers ledit serveur,
B. la réception desdites mises à jour ($dA1_i,...,dAK_i$) téléchargées par au moins l'un desdits clients déterminés ($i_1,...,i_N$),

C. le calcul dudit nouveau modèle mis à jour (A12, ...,AK2) au moyen dudit modèle (A1,...,AK) et d'un agrégat desdites mises à jour reçues (dA1$_i$,...,dAK$_i$).

5. Système selon l'une quelconque des revendications précédentes, dans lequel ledit ensemble de recommandations (R$_{ij}$) est généré au moyen d'une combinaison de deux modèles (A1, A2) et ledit ensemble de données client (u$_i$), dans lequel un modèle (A1) est un filtrage collaboratif et l'autre modèle (A2) est une modélisation prédictive.

6. Système selon l'une quelconque des revendications précédentes, dans lequel ledit ensemble de recommandations (R$_{ij}$) comprend un premier ensemble de recommandations (R1$_{ij}$) généré au moyen d'un modèle (A1, A12, A13) et ledit ensemble de données client (u$_i$), et un second ensemble de recommandations (R2$_{ij}$) généré au moyen d'un autre modèle (A2, A22), ledit premier ensemble de recommandations (R1$_{ij}$), et ledit ensemble de données client (u$_i$).

7. Système selon la revendication 6, dans lequel la génération dudit second ensemble de recommandations (R2$_{ij}$) comprend la sélection et la notation d'articles individuels (j$_P$) dudit premier ensemble de recommandations (R1$_{ij}$).

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120030159 A

- US 20140129500 A1

**Non-patent literature cited in the description**

- A Collaborative Privacy-Preserving Deep Learning System in Distributed Mobile Environment. **LIU MENGHAN et al.** INTERNATIONAL CONFERENCE ON COMPUTATIONAL SCIENCE AND COMPUTATIONAL INTELLIGENCE (CSCI). IEEE, 2016, 192-197